# EUROPEAN PATENT SPECIFICATION

(11) **EP 4 263 708 B1**
(45) Date of publication and mention of the grant of the patent: **10.04.2024**
(21) Application number: 21830339.4
(22) Date of filing: 14.12.2021
(51) Int. Cl.: C08L 69/00

(54) **FIRE RETARDANT POLYCARBONATE COMPOSITIONS FOR TRANSPARENT THIN-WALL APPLICATIONS**
FLAMMHEMMENDE POLYCARBONATZUSAMMENSETZUNGEN FÜR TRANSPARENTE DÜNNWANDIGE ANWENDUNGEN
COMPOSITIONS DE POLYCARBONATE IGNIFUGES POUR DES APPLICATIONS À PAROI MINCE

(30) Priority: 15.12.2020 EP 20214322
(43) Date of publication of application: 25.10.2023
(73) Proprietor: SHPP Global Technologies B.V., 4612 PX Bergen op Zoom (NL)
(72) Inventor: MICCICHE, Fabrizio, 4612 PX Bergen op Zoom (NL); PREHN JR, Frederick C., Mt. Vernon, Indiana 47620 (US); KAMPS, Jan Henk, 4612 PX Bergen op Zoom (NL); VAN DE GRAMPEL, Robert Dirk, 4612 PX Bergen op Zoom (NL)
(74) Representative: Balder IP Law, S.L.
(86) International application number: PCT/IB2021/061720
(87) International publication number: WO 2022/130211

(56) References cited:
- US-A- 4 927 914
- US-A1- 2014 339 586

## Description

### CROSS-REFERENCE TO RELATED APPLICATIONS

This application claims priority to European Application No. 20214322.8, filed December 15, 2020.

### BACKGROUND

This disclosure relates to polycarbonate compositions, and in particular to flame retardant polycarbonate compositions, methods of manufacture, and uses thereof.

Polycarbonates are useful in the manufacture of articles and components for a wide range of applications, from automotive parts to electronic appliances. Because of their broad use, particularly in articles having thin walls, it is desirable to provide polycarbonates with improved impact resistance, low haze and improved flammability. Polycarbonate compositions having good flame retardance at low thicknesses are known for examples from US2014/0339586A1.

There accordingly remains a need in the art for flame retardant polycarbonate compositions that have improved impact resistance. It would be a further advantage if the compositions had low haze and improved flammability.

### SUMMARY

The above-described and other deficiencies of the art are met by a flame retardant composition comprising: a polycarbonate; a branched polycarbonate comprising bisphenol carbonate units, 0.01 to 1.0 mol% of a repeating unit derived from a monomer having a pendant ester group, or a combination thereof, and repeating units derived from a branching agent based on the total moles of the composition; a linear polycarbonate comprising bisphenol carbonate units and 0.01 to 1.0 mol% of a repeating unit derived from a monomer having a pendant ester group based on the total moles of the composition; a flame retardant comprising an alkyl sulfonate, an aromatic sulfonate, an aromatic sulfone sulfonate, an aromatic organophosphorus compound, or a combination thereof, and optionally a cyclic siloxane; optionally, an additive composition; and optionally, a filler.

In another aspect, a method of manufacture comprises combining the above-described components to form a flame retardant composition.

In yet another aspect, an article comprises the above-described flame retardant composition.

In still another aspect, a method of manufacture of an article comprises molding, extruding, or shaping the above-described flame retardant composition into an article.

The above described and other features are exemplified by the following detailed description, examples, and claims.

### DETAILED DESCRIPTION

There is increased demand for thinner walls in the manufacture of finished products to reduce the size and weight of the finished products. Polycarbonate compositions provide many desirable properties, but polycarbonates tend to drip when exposed to a flame, and this behavior worsens as the wall thickness decreases. Although anti-drip agents may be used to in thin-wall applications to reduce or eliminate dripping, their use in polycarbonate compositions can adversely affect impact performance and transparency. Therefore, it is desirable to provide polycarbonate compositions that have improved impact performance, transparency, and have high flame retardance for thin-wall applications.

Surprisingly and unexpectedly, the inventors hereof discovered polycarbonate compositions having the desired combination of properties. Flame retardancy is achieved by combining (i) a copolycarbonate having ester pendant groups and (ii) a flame retardant. Not wishing to be bound by theory, the ester pendant groups inhibit dripping by crosslinking the resin when the polycarbonate is beginning to melt and flow, i.e., prior to dripping. The flame retardant compositions include a polycarbonate, a branched polycarbonate comprising bisphenol carbonate units and repeating units derived from a branching agent, a polycarbonate comprising a repeating unit derived from a bisphenol and a repeating unit derived from a monomer having a pendant ester group, and a flame retardant. A molded sample of the flame retardant compositions can have a notched Izod impact of greater than 500 Joules per meter-squared at 23 °C and a 3.2 millimeter thickness according to ASTM D256; a haze of less than 4% at 2 millimeter thickness, a haze of less than 2% at 1 millimeter thickness, or a combination thereof, each according to ASTM D1003; and a UL-94 Vertical Burning Flame Test rating of V0 at a thickness of 1.0 millimeter, a UL 94 Vertical Burning Flame Test rating of V0 at a thickness of 0.8 millimeter, or a combination thereof.

The flame retardant compositions include a polycarbonate, a branched polycarbonate, and a linear polycarbonate comprising a repeating unit derived from a bisphenol and a repeating unit derived from a monomer having a pendant ester group. The individual components of the flame retardant compositions are described in more detail below.

"Polycarbonate" as used herein means a polymer having repeating structural carbonate units of formula (1) 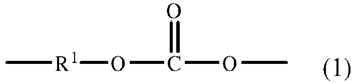 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ may be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ may be derived from a bisphenol of formula (3) 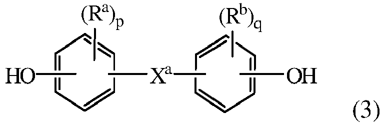 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group may be cyclic or acyclic, aromatic or non-aromatic, and may further comprise heteroatoms such as halogens, oxygen, nitrogen, sulfur, silicon, or phosphorous. The C₁₋₆₀ organic group may be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, preferably methyl, disposed meta to the hydroxy group on each arylene group. In some embodiments, the polycarbonate comprises a linear bisphenol A homopolycarbonate.

The flame retardant composition includes a linear polycarbonate having pendant ester groups. The linear polycarbonate includes a repeating unit derived from a bisphenol and a repeating unit derived from a monomer having the pendant ester group. The monomer having the pendant ester group has the structure 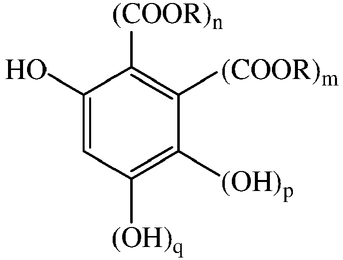 wherein R is C₂-C₁₅ alkyl; each of m, n, p, and q are 0 or 1; m + n = 1; and p + q = 1. In some aspects, the monomer having pendant ester groups is a branched ester, meaning that the R group in the structure above is a branched alkyl group (e.g., isopropyl). In some aspects, R is ethyl, isopropyl, sec-butyl, tert-butyl, or isopentyl, preferably ethyl or isopropyl, more preferably isopropyl. In some aspects, at least one type of monomer having a pendant ester group may be present. In some aspects, a single type of monomer having a pendant ester group may be present. For example, the pendant ester group of the monomer may be an ethyl ester, wherein monomers having a pendant ester group other than an ethyl ester are absent. As another example, the pendant ester group of the monomer may be an isopropyl ester, wherein monomers having a pendant ester group other than an isopropyl ester are absent. In some aspects, two or more types of monomer having a pendant ester group may be present. For example, the polycarbonate having pendant ester groups may include pendant ethyl ester groups, pendant isopropyl ester groups, or a combination thereof. The polycarbonate having pendant ester groups may be present in an amount effective to provide 0.01-1.0 mol%, 0.01-0.8 mol%, 0.01-0.6 mol%, 0.01-0.5 mol%, 0.1-1.0 mol%, 0.1-0.8 mol%, 0.1-0.6 mol%, or 0.1-0.5 mol% ester-substituted carbonate repeating units, based on the total moles of carbonate repeating units in the composition.

The linear polycarbonate having pendant ester groups comprises a repeating unit derived from a bisphenol and a repeating unit derived from a monomer having a pendant ester group may have a weight average molecular weight of 26,000 to 40,000 g/mol or 26,000 to 35,000 g/mol, each measured by gel permeation chromatography (GPC) using bisphenol A homopolycarbonate standards. In some aspects, the polycarbonate having pendant ester groups comprising repeating units derived from a bisphenol and repeating units derived from a monomer having a pendant ester group may include bisphenol A repeating units. In some aspects, the polycarbonate having pendant ester groups may include bisphenol A repeating units and repeating units derived from a monomer having ethyl ester pendant groups, isopropyl ester pendant groups, or a combination thereof.

In addition to the linear polycarbonate having pendant ester groups, the flame retardant composition includes a branched polycarbonate. The branched polycarbonate may include bisphenol carbonate units, 0.01 to 1.0 mol% of a repeating unit derived from a monomer having a pendant ester group, or a combination thereof, and repeating units derived from a branching agent, wherein the mol% of the repeating unit derived from a monomer having a pendant ester group is based on the total moles of carbonate repeating units in the composition. In some aspects, the branched polycarbonate comprises bisphenol carbonate units and repeating units derived from a branching agent wherein the branching agent is present in an amount effective to provide 0.01 to less than 1.43 mol% of branching carbonate repeating units; or bisphenol carbonate units, repeating units derived from a monomer having a pendant ester group, and repeating units derived from a branching agent wherein the branching agent is present in an amount effective to provide 0.01-4 mol% of branching carbonate repeating units; wherein mol% values are based on the total moles of carbonate repeating units in the composition. Within the range from 0.01 to less than 1.43 mol%, the branching agent may be present in an amount effective to provide, for example, 0.01-1.2 mol%, 0.01-1.0 mol%, 0.01-0.5 mol%, or 0.01-0.3 mol% of branching carbonate repeating units. Within the range of 0.01-4 mol%, the branching agent may be present in an amount effective to provide, for example, 0.01-2 mol%, 0.01-1 mol%, or 0.01-0.5 mol% of branching carbonate repeating units.

Branched polycarbonates can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid.

In some aspects, a particular type of branching agent is used to create branched polycarbonate materials. These branched polycarbonate materials have statistically more than two end groups. The branching agent is added in an amount (relative to the bisphenol monomer) that is sufficient to achieve the desired branching content, that is, more than two end groups. The molecular weight of the polymer can become very high upon addition of the branching agent, and to avoid excess viscosity during polymerization, an increased amount of a chain stopper agent can be used, relative to the amount used when the particular branching agent is not present. The amount of chain stopper used is generally above 5 mole percent and less than 20 mole percent compared to the bisphenol monomer.

Such branching agents include aromatic triacyl halides, for example triacyl chlorides of formula (20) 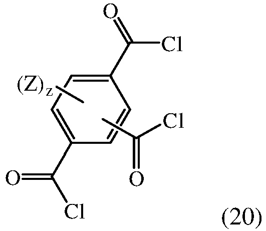 wherein Z is a halogen, C₁₋₃ alkyl, C₁₋₃ alkoxy, C₇₋₁₂ arylalkylene, C₇₋₁₂ alkylarylene, or nitro, and z is 0 to 3; a tri-substituted phenol of formula (21) 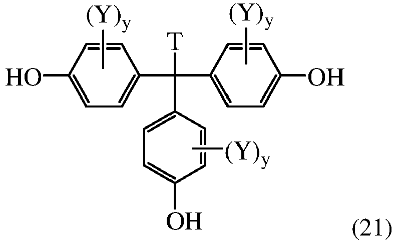 wherein T is a C₁₋₂₀ alkyl, C₁₋₂₀ alkoxy, C₇₋₁₂ arylalkyl, or C₇₋₁₂ alkylaryl, Y is a halogen, C₁₋₃ alkyl, C₁₋₃ alkoxy, C₇₋₁₂ arylalkyl, C₇₋₁₂ alkylaryl, or nitro, s is 0 to 4; or a compound of formula (22) (isatin-bis-phenol) 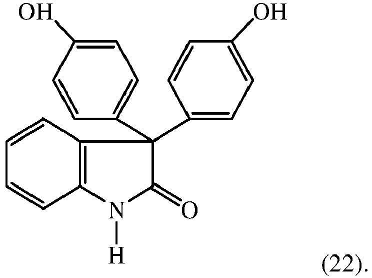 Examples of specific branching agents that are particularly effective in the compositions include trimellitic trichloride (TMTC), tris-p-hydroxyphenylethane (THPE), and isatin-bis-phenol.

The amount of the branching agents used in the manufacture of the polymer will depend on a number of considerations, for example the type of R¹ groups in formula (1), the amount of chain stopper, e.g., cyanophenol or para-cumylphenol, and the desired molecular weight of the polycarbonate. In general, the amount of branching agent is effective to provide 0.1 to 10 branching units per 100 R¹ units, preferably 0.5 to 8 branching units per 100 R¹ units, and more preferably 0.75 to 5 branching units per 100 R¹ units. For branching agents having formula (20), the branching agent is present in an amount to provide 0.1 to 10 triester branching units per 100 R¹ units, preferably 0.5 to 8, and more preferably 0.75 to 5 triester branching units per 100 R¹ units. For branching agents having formula (21), the branching agent is present in an amount effective to provide 0.1 to 10 triphenyl carbonate branching units per 100 R¹ units, preferably 0.5 to 8, and more preferably 2.5 to 3.5 triphenylcarbonate units per 100 R¹ units. In some aspects, a combination of two or more branching agents can be used. Alternatively, the branching agents can be added at a level of 0.05 to 2.0 wt%.

In an aspect, the polycarbonate is a branched polycarbonate comprising units as described above; greater than or equal to 3 mol%, based on the total moles of the carbonate repeating units, of moieties derived from a branching agent; and end-capping groups derived from an end-capping agent having a pKa between 8.3 and 11. The branching agent can comprise trimellitic trichloride, 1,1,1-tris(4-hydroxyphenyl)ethane, or a combination of trimellitic trichloride and 1,1,1-tris(4-hydroxyphenyl)ethane, and the end-capping agent can be phenol or a phenol containing a substituent of cyano group, aliphatic groups, olefinic groups, aromatic groups, halogens, ester groups, ether groups, or a combination thereof. In a specific aspect, the end-capping agent is phenol, p-t-butylphenol, p-methoxyphenol, p-cyanophenol, p-cumylphenol, or a combination thereof.

In addition to the branched polycarbonate and the polycarbonate having pendant ester groups, the flame retardant compositions include a polycarbonate different than the branched polycarbonate and the polycarbonate having pendant ester groups. This polycarbonate, which is not a branched polycarbonate and does not include pendant ester groups, may include a homopolycarbonate, a high-heat polycarbonate, a poly(carbonate-siloxane), or a combination thereof. The polycarbonate may be present, for example, at 15-80 wt%, 20-80 wt%, 30-70 wt%, 30-65 wt%, 35-70 wt%, 35-60 wt%, 40-65 wt%, or 40-60 wt%, each based on the total weight of the composition.

When present, the homopolycarbonate may be derived from a bisphenol of formula (3). In some aspects, the homopolycarbonate is a bisphenol A homopolycarbonate. In an aspect, more than one bisphenol A polycarbonate homopolymer can be present. For example, the bisphenol A polycarbonate homopolymer can comprise a first bisphenol A polycarbonate homopolymer having a weight average molecular weight of 15,000 to 25,000 g/mol or 17,000 to 23,000 g/mol or 18,000 to 22,000 g/mol, and a second bisphenol A polycarbonate homopolymer having a weight average molecular weight of 26,000 to 40,000 g/mol or 26,000 to 35,000 g/mol, each measured by GPC using bisphenol A homopolycarbonate standards. The weight ratio of the first bisphenol A polycarbonate homopolymer relative to the second bisphenol A polycarbonate homopolymer is 10:1 to 1:10, preferably 5:1 to 1:5, more preferably 3:1 to 1:3 or 2:1 to 1:2.

The homopolycarbonate may be present at, for example, 15-80 wt%, 20-75 wt%, 30-70 wt%, 30-65 wt%, 35-70 wt%, 35-60 wt%, 40-65 wt%, or 40-60 wt% each based on the total weight of the composition.

The flame retardant compositions may include a high heat polycarbonate, which as used herein means a polycarbonate having a glass transition temperature (Tg) of 170 °C or higher, determined per ASTM D3418 with a 20 °C/min heating rate. The high heat polycarbonate includes a high heat carbonate group, optionally together with a low heat carbonate group. A combination of different high heat groups or low heat groups can be used.

The low heat carbonate group can be derived from bisphenols of formula (2) as described above wherein X^{a} is a C₁₋₁₈ bridging group.

The low heat bisphenol group may be of formula (3) 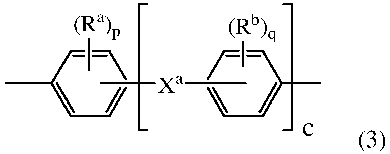 wherein R^{a} and R^{b} are each independently a halogen, C₁₋₃ alkoxy, or C₁₋₃ alkyl, c is 0 to 4, and p and q are each independently integers of 0 or 1. In an aspect, p and q is each 0, or p and q is each 1 and R^{a} and R^{b} are each a methyl, disposed meta to the hydroxy group on each arylene group. X^{a} in formula (3) is a bridging group connecting the two hydroxy-substituted aromatic groups, where the bridging group and the hydroxy substituent of each C₆ arylene group are disposed ortho, meta, or para (preferably para) to each other on the C₆ arylene group, for example, a single bond, -O-, -S-, -S(O)-, -S(O)₂-, -C(O)-, or a C₁₋₆ organic group, which may be cyclic or acyclic, aromatic or non-aromatic, and may further comprise heteroatoms such as halogens, oxygen, nitrogen, sulfur, silicon, or phosphorous. For example, X^{a} may be a C₃₋₆ cycloalkylidene, a C₁₋₆ alkylidene of the formula -C(R^{c})(R^{d}) - wherein R^{c} and R^{d} are each independently hydrogen, C₁₋₅ alkyl, or a group of the formula -C(=R^{e})- wherein R^{e} is a divalent C₁₋₅ hydrocarbon group. Some illustrative examples of dihydroxy compounds that may be used in the manufacture of the low heat monomer units are described, for example, in WO 2013/175448 A1, US 2014/0295363, and WO 2014/072923.

In an aspect, the low heat monomer is bisphenol A, which provides the low heat group of formula (3a).

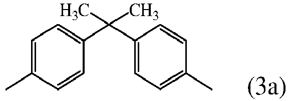

The high heat bisphenol group is derived from a high heat bisphenol monomer having at least 19 carbon atoms. As used herein, a high heat bisphenol monomer is a monomer where the corresponding homopolycarbonate of the monomer has a glass transition temperature (Tg) of 155°C or higher. Examples of such high heat bisphenol groups include groups of formulas (4) to (10) 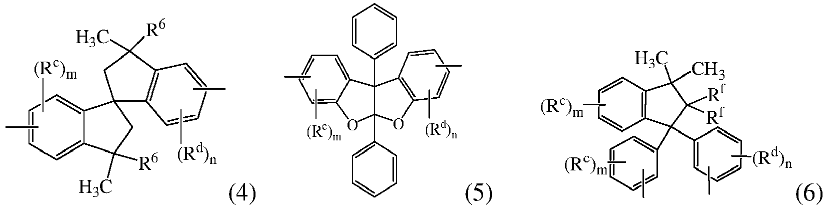 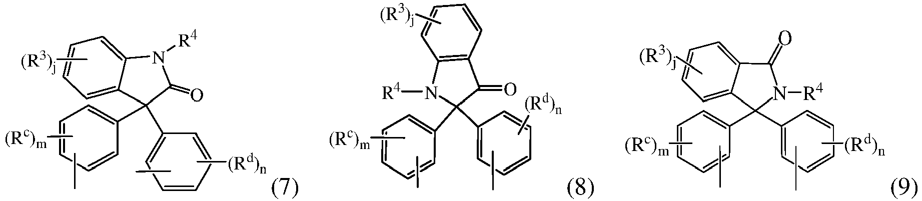 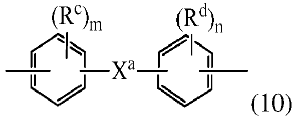 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R_{f} together are a carbonyl group, each R³ is independently C₁₋₆ alkyl, R⁴ is hydrogen, C₁₋₆ alkyl, or phenyl optionally substituted with 1 to 5 C₁₋₆ alkyl groups, R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R⁸ is C₆₋₁₀ alkyl, C₆₋₈ cycloalkyl, or C₆₋₁₂ aryl, or - (Q^{a})ₓ-G-(Q^{b})_{y}- group, wherein Q^{a} and Q^{b} are each independently a C₁₋₃ alkylene, G is a C₃₋₁₀ cycloalkylene, x is 0 or 1, and y is 0 or 1, and j, m, and n are each independently 0 to 4. A combination of high heat bisphenol groups may be used.

In an aspect, R^{c} and R^{d} are each independently a C₁₋₃ alkyl, or C₁₋₃ alkoxy, each R⁶ is methyl, each R³ is independently C₁₋₃ alkyl, R⁴ is methyl, or phenyl, each R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or -(Q¹)ₓ-G-(Q²)_{y}-group, wherein Q¹ and Q² are each independently a C₁₋₃ alkylene and G is a C₃₋₁₀ cycloalkylene, x is 0 or 1, and y is 0 or 1, and j, m, and n are each independently 0 or 1.

Exemplary high heat bisphenol groups include those of formulas (9a) and (10a) to (10k) 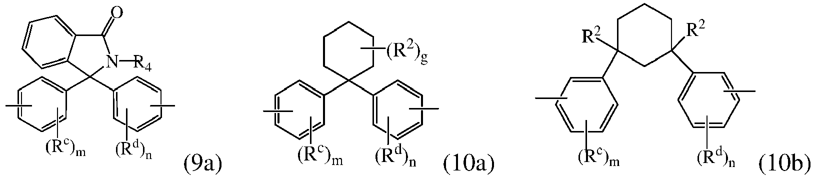 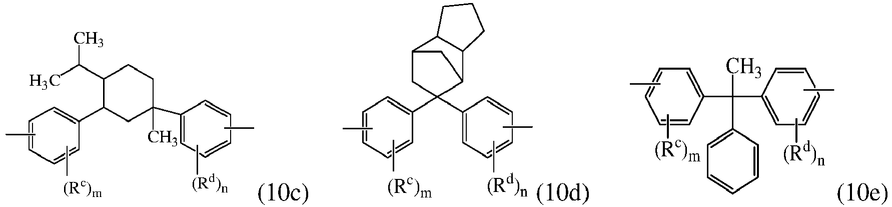 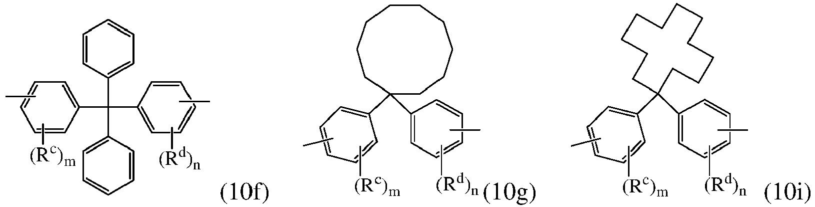 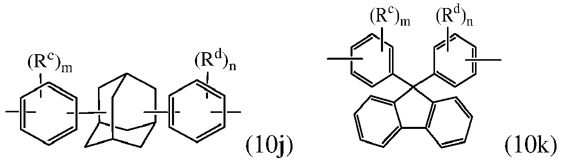 wherein R^{c} and R^{d} are the same as defined for formulas (4) to (10), each R² is independently C₁₄ alkyl, m and n are each independently 0 to 4, each R³ is independently C₁₋₄ alkyl or hydrogen, R⁴ is C₁₋₆ alkyl or phenyl optionally substituted with 1 to 5 C₁₋₆ alkyl groups, and g is 0 to 10. In a specific aspect each bond of the bisphenol group is located para to the linking group that is X^{a}. In an aspect, R^{c} and R^{d} are each independently a C₁₋₃ alkyl, or C₁₋₃ alkoxy, each R² is methyl, x is 0 or 1, y is 1, and m and n are each independently 0 or 1.

The high heat bisphenol group is preferably of formula (9a-2) or (10a-2) 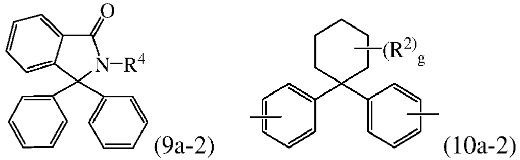 wherein R⁴ is methyl or phenyl, each R² is methyl, and g is 1 to 4. Preferably, the high heat bisphenol group is derived from 2-phenyl-3,3'-bis(4-hydroxyphenyl)phthalimidine (PPPBP) or from 1,1-bis(4-hydroxyphenyl)-3,3,5-trimethylcyclohexane (BP-TMC).

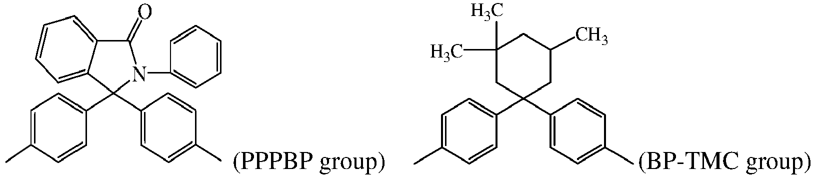

The polycarbonates may have an intrinsic viscosity, as determined in chloroform at 25°C, of 0.3 to 1.5 deciliters per gram (dl/gm), preferably 0.45 to 1.0 dl/gm. The polycarbonates may have a weight average molecular weight (Mw) of 10,000 to 200,000 g/mol, preferably 20,000 to 100,000 g/mol, as measured by gel permeation chromatography (GPC), using a crosslinked styrene-divinylbenzene column and bisphenol A homopolycarbonate standards. GPC samples are prepared at a concentration of 1 mg per ml, and are eluted at a flow rate of 1.0 milliliter per minute with methylene chloride as the eluent.

The high-heat copolycarbonates may be present at, for example, 20-50 wt%, 25-50 wt%, 25-45 wt%, or 20-40 wt%, each based on the total weight of the composition.

"Polycarbonates" include homopolycarbonates (wherein each R¹ in the polymer is the same), copolymers comprising different R¹ moieties in the carbonate repeating units ("copolycarbonates"), and copolymers comprising carbonate repeating units and other types of polymer units, such as ester units or siloxane units.

In addition to the homopolycarbonate and the high-heat polycarbonate, the polycarbonate of the flame retardant compositions may include a poly(carbonate-siloxane), also referred to in the art as a polycarbonate-polysiloxane copolymer. The polysiloxane blocks comprise repeating diorganosiloxane units as in formula (10) 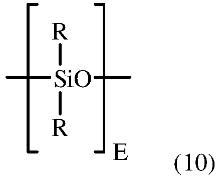 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (10) can vary widely depending on the type and relative amount of each component in the thermoplastic composition, the desired properties of the composition, and like considerations. Generally, E has an average value of 2 to 1,000, preferably 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used. A combination of a first and a second (or more) poly(carbonate-siloxane) copolymers can be used, wherein the average value of E of the first copolymer is less than the average value of E of the second copolymer.

In an aspect, the polysiloxane blocks are of formula (11) 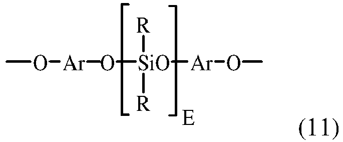 wherein E and R are as defined for formula (10); each R can be the same or different, and is as defined above; and Ar can be the same or different, and is a substituted or unsubstituted C₆₋₃₀ arylene, wherein the bonds are directly connected to an aromatic moiety. Ar groups in formula (11) can be derived from a C₆₋₃₀ dihydroxyarylene compound, for example a dihydroxyarylene compound of formula (3) or (6). Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (13) 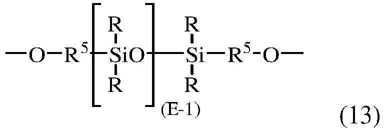 wherein R and E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (14): 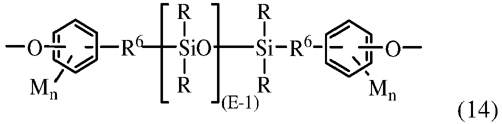 wherein R and E are as defined above. R⁶ in formula (14) is a divalent C₂₋₈ aliphatic group. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 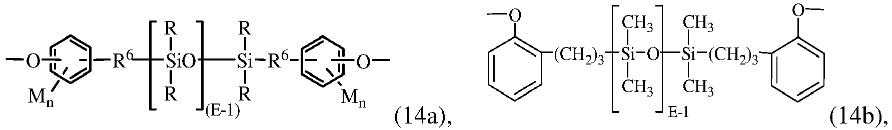 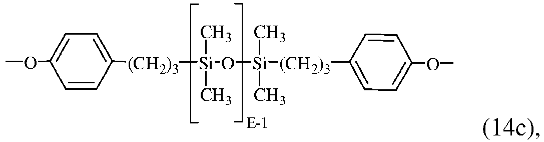 or a combination thereof, wherein E has an average value of 2 to 200, 2 to 125, 5 to 125, 5 to 100, 5 to 50, 20 to 80, or 5 to 20.

Blocks of formula (14) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A¹ of Hoover, page 5, Preparation 2.

Transparent poly(carbonate-siloxane) copolymers comprise carbonate units (1) derived from bisphenol A, and repeating siloxane units (14a), (14b), (14c), or a combination thereof (preferably of formula 14a), wherein E has an average value of 4 to 50, 4 to 15, preferably 5 to 15, more preferably 6 to 15, and still more preferably 7 to 10. The transparent copolymers can be manufactured using one or both of the tube reactor processes described in U.S. Patent Application Publication No. US 2004/0039145A1 or the process described in U.S. Patent No. 6,723,864 can be used to synthesize the poly(carbonate-siloxane) copolymers.

The poly(carbonate-siloxane) copolymers can comprise 50 to 99 wt% of carbonate units and 1 to 50 wt% siloxane units. Within this range, the poly(carbonate-siloxane) copolymer can comprise 70 to 98 wt%, more preferably 75 to 97 wt% of carbonate units and 2 to 30 wt%, more preferably 3 to 25 wt% siloxane units.

In an aspect, a blend is used, in particular a blend of a bisphenol A homopolycarbonate and a poly(carbonate-siloxane) block copolymer of bisphenol A blocks and eugenol capped polydimethylsiloxane blocks, of the formula 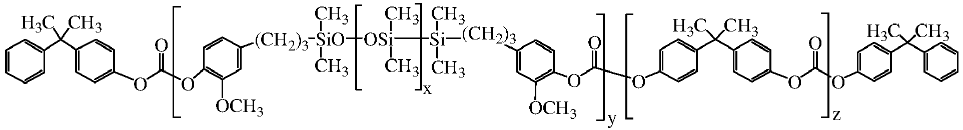 wherein x is 1 to 200, preferably 5 to 85, preferably 10 to 70, preferably 15 to 65, and more preferably 40 to 60; x is 1 to 500, or 10 to 200, and z is 1 to 1000, or 10 to 800. In an aspect, x is 1 to 200, y is 1 to 90 and z is 1 to 600, and in another aspect, x is 30 to 50, y is 10 to 30 and z is 45 to 600. The polysiloxane blocks can be randomly distributed or controlled distributed among the polycarbonate blocks.

In an aspect, the poly(carbonate-siloxane) copolymer comprises 10 wt% or less, preferably 6 wt% or less, and more preferably 4 wt% or less, of the polysiloxane based on the total weight of the poly(carbonate-siloxane) copolymer, and are generally optically transparent and are commercially available under the name EXL-T from SABIC. In another aspect, the poly(carbonate-siloxane) copolymer comprises 10 wt% or more, preferably 12 wt% or more, and more preferably 14 wt% or more, of the polysiloxane copolymer based on the total weight of the poly(carbonate-siloxane) copolymer, are generally optically opaque and are commercially available under the trade name EXL-P from SABIC.

Poly(carbonate-siloxane)s can have a weight average molecular weight of 2,000 to 100,000 g/mol, preferably 5,000 to 50,000 g/mol as measured by gel permeation chromatography using a crosslinked styrene-divinyl benzene column, at a sample concentration of 1 milligram per milliliter, using bisphenol A homopolycarbonate standards.

The poly(carbonate-siloxane)s can have a melt volume flow rate, measured at 300°C/1.2 kg, of 1 to 50 cubic centimeters per 10 minutes (cc/10 min), preferably 2 to 30 cc/10 min. Combinations of the poly(carbonate-siloxane)s of different flow properties can be used to achieve the overall desired flow property.

The polycarbonate may include a first poly(carbonate-siloxane), a second poly(carbonate-siloxane) different from the first poly(carbonate-siloxane), or a combination thereof. The first polycarbonate-siloxane copolymer may have a siloxane content of 10 to 30 wt%, based on the total weight of the first polycarbonate-siloxane copolymer. Within this range, the first polycarbonate-siloxane copolymer may have a siloxane content of 15 to 25 wt%. As used herein, "siloxane content" of a poly(carbonate-siloxane) refers to the content of siloxane units based on the total weight of the polycarbonate-siloxane copolymer.

The second polycarbonate-siloxane copolymer may have a siloxane content of 30 to 70 wt%, based on the total weight of the second polycarbonate-siloxane copolymer. Within this range, the second polycarbonate-siloxane copolymer may have a siloxane content of greater than 30 wt%, 35 to 70 wt%, or 35 to 65 wt%.

The first polycarbonate-siloxane copolymer may have a weight average molecular weight of 18,000 to 50,000 g/mol, preferably 25,000 to 40,000 g/mol, more preferably 27,000 to 32,000 g/mol as measured by gel permeation chromatography using a crosslinked styrene-divinyl benzene column, at a sample concentration of 1 milligram per milliliter, using bisphenol A homopolycarbonate standards.

The second polycarbonate-siloxane copolymer may have a weight average molecular weight of 21,000 to 50,000 g/mol. Within this range, the weight average molecular weight can be 25,000 to 45,000 g/mol, or 30,000 to 45,000 g/mol, or 32,000 to 43,000 g/mol, or 34,000 to 41,000 g/mol, or 35,000 to 40,000 g/mol. In an aspect, the polycarbonate-siloxane copolymer may have a weight average molecular weight of 26,000 to 45,000 g/mol, or 30,000 to 45,000 g/mol, or 35,000 to 40,000 g/mol. The weight average molecular weight may be measured by gel permeation chromatography using a crosslinked styrene-divinyl benzene column, at a sample concentration of 1 milligram per milliliter, using bisphenol A homopolycarbonate standards.

The poly(carbonate-siloxane)s may be present, for example, in amount effective to provide 0.5-20 wt%, 0.5-15 wt%, 0.5-10 wt%, or 0.5-5 wt% siloxane, each based on the total weight of the composition.

Polycarbonates can be manufactured by processes such as interfacial polymerization and melt polymerization, which are known, and are described, for example, in International Patent Application Publication Nos. WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryloyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt. %. Combinations comprising linear polycarbonates and branched polycarbonates can be used.

In some embodiments, the flame retardant compositions comprise 15 to 80 weight percent of the polycarbonate, 15 to 45 weight percent of the branched polycarbonate, and 2 to 60 weight percent of the linear polycarbonate comprising bisphenol carbonate units and repeating units derived from a monomer having a pendant ester group. In other embodiments, the flame retardant compositions comprise 20 to 75 weight percent of the polycarbonate, 20 to 40 weight percent of the branched polycarbonate, and 3 to 50 weight percent of the linear polycarbonate comprising bisphenol carbonate units and repeating units derived from a monomer having a pendant ester group.

The flame retardant compositions include a flame retardant including an alkyl sulfonate, an aromatic sulfonate, an aromatic sulfone sulfonate, an aromatic organophosphorus compound, or a combination thereof, and optionally a cyclic siloxane. Alkyl sulfonate flame retardants include, for example salts of C₂₋₁₆ alkyl sulfonates such as potassium perfluorobutane sulfonate (Rimar salt), potassium perfluorooctane sulfonate, and tetraethylammonium perfluorohexane sulfonate. Exemplary salts of aromatic sulfonates include sodium benzene sulfonate, sodium toluene sulfonate (NATS), and the like. Exemplary aromatic sulfone sulfonates include potassium diphenylsulfone sulfonate (KSS), and the like. In addition to the foregoing, inorganic salts may be present that are formed by reacting for example an alkali metal or alkaline earth metal (e.g., lithium, sodium, potassium, magnesium, calcium and barium salts) and an inorganic acid complex salt, for example, an oxo-anion (e.g., alkali metal and alkaline-earth metal salts of carbonic acid, such as Na₂CO₃, K₂CO₃, MgCO₃, CaCO₃, and BaCO₃, or a fluoro-anion complex such as Li₃AlF₆, BaSiF₆, KBF₄, K₃AlF₆, KAlF₄, K₂SiF₆, or Na₃AlF₆ or the like. Rimar salt and KSS and NATS, alone or in combination with other flame retardants, are particularly useful.

The flame retardant may include an aromatic organophosphorus compound. In the aromatic organophosphorus compounds that have at least one organic aromatic group, the aromatic group can be a substituted or unsubstituted C₃₋₃₀ group containing one or more of a monocyclic or polycyclic aromatic moiety (which can optionally contain with up to three heteroatoms (N, O, P, S, or Si)) and optionally further containing one or more nonaromatic moieties, for example alkyl, alkenyl, alkynyl, or cycloalkyl. The aromatic moiety of the aromatic group can be directly bonded to the phosphorous-containing group, or bonded via another moiety, for example an alkylene group. The aromatic moiety of the aromatic group can be directly bonded to the phosphorous-containing group, or bonded via another moiety, for example an alkylene group. In an aspect the aromatic group is the same as an aromatic group of the polycarbonate backbone, such as a bisphenol group (e.g., bisphenol A), a monoarylene group (e.g., a 1,3-phenylene or a 1,4-phenylene), or a combination comprising at least one of the foregoing.

The phosphorous-containing group can be a phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the foregoing phosphorous-containing groups can be the same or different, provided that at least one R is an aromatic group. A combination of different phosphorous-containing groups can be used. The aromatic group can be directly or indirectly bonded to the phosphorous, or to an oxygen of the phosphorous-containing group (i.e., an ester).

In an aspect the aromatic organophosphorus compound is a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups can be joined together to provide a cyclic group. In some aspects G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional aromatic organophosphorus compounds are also useful, for example, compounds of the formulas 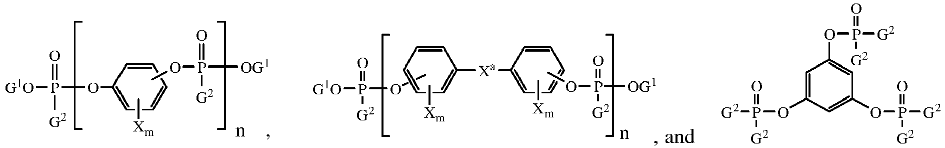 wherein each G¹ is independently a C₁₋₃₀ hydrocarbyl; each G² is independently a C₁₋₃₀ hydrocarbyl or hydrocarbyloxy; X^{a} is as defined in formula (3) or formula (4); each X is independently a bromine or chlorine; m is 0 to 4, and n is 1 to 30. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen. In a specific aspect, X^{a} is a single bond, methylene, isopropylidene, or 3,3,5-trimethylcyclohexylidene.

Specific aromatic organophosphorus compounds are inclusive of acid esters of formula (9) 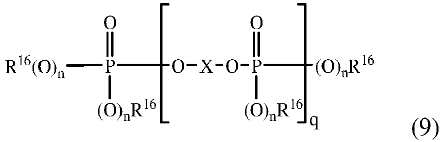 wherein each R¹⁶ is independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl and X is a mono- or poly-nuclear aromatic C₆₋₃₀ moiety or a linear or branched C₂₋₃₀ aliphatic radical, which can be OH-substituted and can contain up to 8 ether bonds, provided that at least one R¹⁶ or X is an aromatic group; each n is independently 0 or 1; and q is from 0.5 to 30. In some aspects each R¹⁶ is independently C₁₋₄ alkyl, naphthyl, phenyl(C₁₋₄)alkylene, aryl groups optionally substituted by C₁₋₄ alkyl; each X is a mono- or poly-nuclear aromatic C₆₋₃₀ moiety, each n is 1; and q is from 0.5 to 30. In some aspects each R¹⁶ is aromatic, e.g., phenyl; each X is a mono- or poly-nuclear aromatic C₆₋₃₀ moiety, including a moiety derived from formula (2); n is one; and q is from 0.8 to 15. In other aspects, each R¹⁶ is phenyl; X is cresyl, xylenyl, propylphenyl, or butylphenyl, one of the following divalent groups 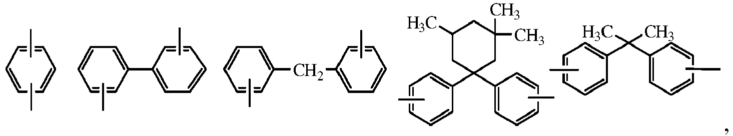 or a combination comprising one or more of the foregoing; n is 1; and q is from 1 to 5, or from 1 to 2. In some aspects at least one R¹⁶ or X corresponds to a monomer used to form the polycarbonate, e.g., bisphenol A, resorcinol, or the like. Aromatic organophosphorus compounds of this type include the bis(diphenyl) phosphate of hydroquinone, resorcinol bis(diphenyl phosphate) (RDP), and bisphenol A bis(diphenyl) phosphate (BPADP), and their oligomeric and polymeric counterparts.

The organophosphorus flame retardant containing a phosphorous-nitrogen bond can be a phosphazene, phosphonitrilic chloride, phosphorous ester amide, phosphoric acid amide, phosphonic acid amide, phosphinic acid amide, or tris(aziridinyl) phosphine oxide. These flame-retardant additives are commercially available. In an aspect, the organophosphorus flame retardant containing a phosphorous-nitrogen bond is a phosphazene or cyclic phosphazene of the formulas 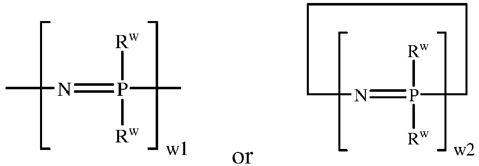 wherein w1 is 3 to 10,000; w2 is 3 to 25, or 3 to 7; and each R^{w} is independently a C₁₋₁₂ alkyl, alkenyl, alkoxy, aryl, aryloxy, or polyoxyalkylene group. In the foregoing groups at least one hydrogen atom of these groups can be substituted with a group having an N, S, O, or F atom, or an amino group. For example, each R^{w} can be a substituted or unsubstituted phenoxy, an amino, or a polyoxyalkylene group. Any given R^{w} can further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. In an aspect, the phosphazene has a structure represented by the formula 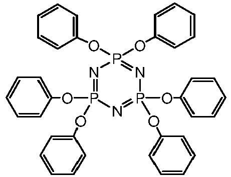 Commercially available phenoxyphosphazenes having the aforementioned structures are LY202 manufactured and distributed by Lanyin Chemical Co., Ltd, FP-110 manufactured and distributed by Fushimi Pharmaceutical Co., Ltd, and SPB-100 manufactured and distributed by Otsuka Chemical Co., Ltd.

The aromatic organophosphorus flame retardant may be present, for example, from 0.01-8 wt%, 0.1-8 wt%, or 1-8 wt%, each based on the total weight of the composition.

The flame retardant compositions may include a cyclic siloxane in combination with the flame retardant comprising an alkyl sulfonate, an aromatic sulfonate, an aromatic sulfone sulfonate, or a combination thereof. The cyclic siloxanes have the general formula (R₃SiO)_{y} wherein each R₃ is the same or different, and is a monovalent hydrocarbon or a C₁₋₁₈ monovalent fluorinated hydrocarbon and y is 3 to 12. In an embodiment, each R₃ is the same and is a C₁₋₇ alkyl, C₁₋₇ fluorinated alkyl, C₇ arylalkylene, or phenyl. Examples of fluorinated hydrocarbon include, but are not limited to, 3-fluoropropyl, 3,3,3-trifluoropropyl, 5,5,5,4,4,3,3-heptafluoropentyl, fluorophenyl, difluorophenyl and trifluorotolyl. Examples of suitable cyclic siloxanes include, but are not limited to, octamethylcyclotetrasiloxane, 1,2,3,4-tetramethyl-1,2,3,4-tetravinylcyclotetrasiloxane, 1,2,3,4-tetramethyl-1,2,3,4-tetraphenylcyclotetrasiloxane, octaethylcyclotetrasiloxane, octapropylcyclotetrasiloxane, octabutylcyclotetrasiloxane, decamethylcyclopentasiloxane, dodecamethylcyclohexasiloxane, tetradecamethylcycloheptasiloxane, hexadecamethylcyclooctasiloxane, eicosamethylcyclodecasiloxane, octaphenylcyclotetrasiloxane, and the like. In some aspects the flame retardant includes a cyclic siloxane, preferably octaphenylcyclotetrasiloxane and an alkyl sulfonate, preferably potassium perfluorobutane sulfonate.

When the flame retardant comprises an alkyl sulfonate, an aromatic sulfonate, an aromatic sulfone sulfonate, or a combination thereof, and optionally a cyclic siloxane, the flame retardant may be present in an amount of 0.01-1.0 wt%, 0.01-0.5 wt%, 0.01-0.30 wt%, 0.01-0.2 wt%, 0.05-1.0 wt%, 0.05-0.05, 0.05-0.30 wt%, or 0.05-0.2 wt%, each based on the total weight of the composition. In some aspects the flame retardant comprises an alkyl sulfonate and a cyclic siloxane. In some aspects, the cyclic siloxane is absent.

The flame retardant composition may include a filler. Possible fillers or reinforcing agents include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as TiO₂, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymer matrix, or the like; single crystal fibers or "whiskers" such as silicon carbide, alumina, boron carbide, iron, nickel, copper, or the like; fibers (including continuous and chopped fibers) such as asbestos, carbon fibers, glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic polymers, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or a combination thereof.

The fillers and reinforcing agents can be coated with a layer of metallic material to facilitate conductivity, or surface treated with silanes to improve adhesion and dispersion with the polymer matrix. In addition, the reinforcing fillers can be provided in the form of monofilament or multifilament fibers and can be used individually or in combination with other types of fiber, through, for example, co-weaving or core/sheath, side-by-side, orange-type or matrix and fibril constructions, or by other methods known to one skilled in the art of fiber manufacture. Co-woven structures include glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. When present, fillers may be used in amounts of 5-45 wt%, 5-30 wt%, 10-30 wt%, 5-20 wt%, 5-15 wt%, or 5-10 wt%, each based on the total weight of the composition.

The flame retardant compositions may include various additives ordinarily incorporated into polymer compositions of this type, with the proviso that the additive(s) are selected so as to not significantly adversely affect the desired properties of the composition, in particular flame retardancy, haze and transparency. Such additives can be mixed at a suitable time during the mixing of the components for forming the composition. Additives include fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, a flame retardant different from an alkyl sulfonate, an aromatic sulfonate, an aromatic sulfone sulfonate, and a cyclic siloxane, and anti-drip agents. A combination of additives can be used, for example a combination of a heat stabilizer, mold release agent, and ultraviolet light stabilizer. In general, the additives are used in the amounts generally known to be effective. For example, the total amount of the additives can be 0.01 to 5 wt%, based on the total weight of the polycarbonate composition.

When present, the additive composition may include an anti-drip agent, an antioxidant, a mold release agent, a UV stabilizer, or a combination thereof. Anti-drip agents may be present in the additive composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Anti-drip agents can be used in amounts of 0.01-1 wt%, based on the total weight of the composition. In some aspects, an anti-drip agent is excluded from the flame retardant compositions.

The polycarbonate compositions can be manufactured by various methods known in the art. For example, powdered polycarbonate, and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

A molded sample having a thickness of 3.2 millimeters may have a notched Izod impact of at least 500 joules per meter (J/m), at least 600 J/m, at least 700 J/m, from 500-1500 J/m, 500-1200 J/m, or 500-1000 J/m, from 700-1500 J/m, 700-1200 J/m, or 700-1000 J/m at 23 °C, each according to ASTM D256.

A molded sample of the polycarbonate composition may have a flame test rating of V0, as measured according to UL-94 at a thickness of 1.5 millimeter, a flame test rating of V0, as measured according to UL-94 at a thickness of 1.0 millimeter, a flame test rating of V0, as measured according to UL-94 at a thickness of 0.8 millimeter or a combination thereof.

The polycarbonate compositions can have a haze of less than 1 % as measured using 2 mm thick plaques, a haze of less than 1% as measured using 1 mm plaques, or a combination thereof, each according to ASTM-D1003-00.

Shaped, formed, or molded articles comprising the polycarbonate compositions are also provided. The polycarbonate compositions can be molded into useful shaped articles by a variety of methods, such as injection molding, extrusion, rotational molding, blow molding and thermoforming. Some examples of articles include computer and business machine housings such as housings for monitors, handheld electronic device housings such as housings for cell phones and personal health care devices, housings for consumer electronics (e.g., mobile phone battery housings, battery covers, and display panels), housings for electrical components, such as, for example, an electric vehicle charger, smart meter covers, boxes, lighting (e.g., LED), electrical connectors, and components of lighting fixtures, ornaments, home appliances, roofs, greenhouses, sun rooms, swimming pool enclosures, and the like.

In some aspects, the polycarbonate compositions can be molded using a method including heating at a maximum molding temperature of 285 °C at a residence time of less than 10 minutes; heating at a maximum molding temperature of 295 °C at a residence time of less than 10 minutes; and heating at a maximum molding temperature of 305 °C at a residence time of less than 10 minutes. In some aspects, the polycarbonate compositions can be molded using a method including heating at a maximum molding temperature of 285 °C at a residence time of up to 30 minutes; heating at a maximum molding temperature of 295 °C at a residence time of up to 30 minutes; and heating at a maximum molding temperature of 305 °C at a residence time of up to 30 minutes.

This disclosure is further illustrated by the following examples, which are nonlimiting.

### EXAMPLES

The following components are used in the examples. Unless specifically indicated otherwise, the amount of each component is in weight percent, based on the total weight of the composition.

The materials shown in Table 1 were used.

**Table 1**

| Component | Description | Source |
|---|---|---|
| PC-1 | Linear amorphous bisphenol A polycarbonate (BPA) homopolymer produced by interfacial polymerization, weight average molecular weight 29,000-31,000 g/mol determined by GPC using bisphenol A homopolycarbonate standards. | SABIC |
| PC-2 | Linear amorphous BPA homopolymer produced by interfacial polymerization, weight average molecular weight 20,000-22,000 g/mol determined by GPC using bisphenol A homopolycarbonate standards. | SABIC |
| PC-3 | Branched BPA homopolymer, containing 0.4 mol% 1,1,1-tris(4-hydroxyphenyl)ethane (THPE) branching agent, weight average molecular weight 33,200-34,200 g/mol determined by GPC using bisphenol A homopolycarbonate standards. | SABIC |
| PC-4 | 1/99 mol% amorphous isopropyl-2,4-dihydroxybenzoate (IDHB)-BPA copolymer produced by interfacial polymerization, weight average molecular weight 20,000-22,000 g/mol determined by GPC using bisphenol A homopolycarbonate standards. | SABIC |
| PC-5 | 1/99 mol% amorphous IDHB-BPA copolymer produced by interfacial polymerization, weight average molecular weight 29,000-31,000 g/mol determined by GPC using bisphenol A homopolycarbonate standards. | SABIC |
| PC-6 | 3/97 mol% amorphous IDHB-BPA copolymer produced by interfacial polymerization, weight average molecular weight 29,000-31,000 g/mol, determined by GPC using bisphenol A homopolycarbonate standards. | SABIC |
| PC-7 | Branched, cyanophenol end-capped bisphenol A homopolycarbonate produced via interfacial polymerization, containing 3 mol% 1,1,1-tris(4-hydroxyphenyl)ethane (THPE) branching agent, weight average molecular weight 29,000-31,000 g/mol determined by GPC using bisphenol A homopolycarbonate standards. | SABIC |
| PC-8 | 2/98 mol% amorphous IDHB-BPA copolymer produced by interfacial polymerization, Mw 29,000-31,000 g/mol determined by GPC using bisphenol A homopolycarbonate standards. | SABIC |
| PC-9 | 4/96 mol% amorphous IDHB-BPA copolymer produced by interfacial polymerization, weight average molecular weight 29,000-31,000 g/mol determined by GPC using bisphenol A homopolycarbonate standards. | SABIC |
| PC-10 | 5/95 mol% amorphous IDHB-BPA copolymer produced by interfacial polymerization, weight average molecular weight 29,000-31,000 g/mol determined by GPC using bisphenol A homopolycarbonate standards. | SABIC |
| PC-11 | 4/96 mol% amorphous EDHB-BPA copolymer produced by interfacial polymerization, weight average molecular weight 29,000-31,000 g/mol determined by GPC using bisphenol A homopolycarbonate standards. | SABIC |
| PC-12 | 1/99 mol% amorphous EDHB-BPA copolymer produced by interfacial polymerization, weight average molecular weight 29,000-31,000 g/mol determined by GPC using bisphenol A homopolycarbonate standards. | SABIC |
| PC-13 | 5/95 mol% amorphous EDHB-BPA copolymer produced by interfacial polymerization, weight average molecular weight 29,000-31,000 g/mol determined by GPC using bisphenol A homopolycarbonate standards. | SABIC |
| UVA | 2-(2-Hydroxy-5-tert-octylphenyl)benzotriazole, commercially available as UVA 5411 | CIBA |
| TSAN | Encapsulated Polytetrafluoroethylene, CAS Reg. No. 9002-84-0, with 47-53 wt% poly(tetrafluoroethylene) | SABIC |
| PETS | Pentaervthritol tetrastearate, >90% esterified | Faci |
| Phosphite | Tris(2,4-di-tert-butylphenyl) phosphite, available as IRGAFOS 168 | BASF |
| AO | Octadecyl β-(3,5-di-tert-butyl-4-hydroxyphenyl)-propionate, commercially available as AO1076 | |
| SILOXANE | Octaphenylcyclotetrasiloxane | Momentive |
| RIMAR | Potassium perfluorobutanesulfonate, CAS Reg. No. 29420-49-3. | 3M |

The preparation of the polycarbonates is described as follows.

General Procedure for PC-4 to PC-6 and PC-8 to PC-13: In a pre-formulation tank, 7 L water, 23 L methylene chloride, 4200 g BPA, 40 mL TEA, 10 g sodium gluconate, and isopropyl 3,5-dihydroxybenzoate (IDHB) or ethyl 3,5-dihydroxybenzoate (EDHB) were added and well mixed. The resulting formulation was then transferred to the reactor, where phosgene was added at a rate of 90 g/min and the mixture was recirculated. To maintain a pH of 9-10, a 30% caustic solution was then added at a program-determined rate. During the course of the phosgenation, para-cumylphenol (PCP) in methylene chloride in solution was added at 200 g/min. Following completion of reaction, the molecular weight of the reaction mixture was checked along with any existence of any excess phosgene. The reaction mixture was neutralized with dilute acid and the organic layer was separated. The organic layer was then washed with deionized water. The organic layer was then subjected to steam precipitation, and the resin was isolated as a wet powder and then dried provide a dried powder. For PC-4, 36.1 g IDHB and 114 g of PCP were used. For PC-6, 108 g IDHB and 116 g PCP were used. For PC-8, 72 g of IDHB and 115 g PCP were used. For PC-10, 180 g IDHB and 119 g PCP were used. For PC-11, 137 g EDHB and 122 g PCP were used. For PC-12, 34 g EDHB and 119 g PCP were used. For PC-13, 171 g EDHB and 124 g PCP were used.

The testing samples were prepared as described below and the following test methods were used.

Typical compounding procedures are described as follows: all raw materials are pre-blended and then extruded using a twin extruder. The composition was melt-kneaded, extruded, cooled through a water bath and pelletized. A typical extrusion profile is listed in Table 2.

**Table 2**

| Parameter | Unit | Value |
|---|---|---|
| Feed | °C | 40 |
| Zone 1 Temp | °C | 200 |
| Zone 2 Temp | °C | 250 |
| Zone 3 Temp | °C | 270 |
| Zones 4-9 Temp | °C | 290 |
| Screw speed | rpm | 300 |
| Throughput | kg/hr | 14 |
| Torque | % | max |

Injection molding was performed using the Engel 45 to obtain molded specimens. Temperature profile and general molding conditions used for standard and various molding conditions are reported in Table 3.

**Table 3**

| Parameters | Unit | Conditions |
|---|---|---|
| Drying Temperature | °C | 120 |
| Drying Time | hrs | 2 |
| Hopper temperature | °C | 40 |
| Nozzle Temperature | °C | 300 |
| Rear - Zone 1 Temperature | °C | 285 |
| Middle - Zone 2 Temperature | °C | 295 |
| Front - Zone 3 Temperature | °C | 305 |
| Mold Temperature | °C | 90 |

Sample preparation and testing methods are described in Table 2.

**Table 4**

| Property | Standard | Conditions | Specimen Type |
|---|---|---|---|
| MVR | ISO 1133 | 300 °C, 2.16 kg, 300 sec | pellets |
| Vicat B120 Softening Temperature | ISO 306 | Granules dried at 120 C for 2 h prior to testing | 60 mm x 60 mm x 1 mm; |
| | | | 60 mm x 60 mm x 2 mm |
| % Haze | ASTM D1003 | | 60 mm x 60 mm x 1 mm; |
| | | | 60 mm x 60 mm x 2 mm |
| % Transparency | ASTM D1003 | | 60 mm x 60 mm x 1 mm; |
| | | | 60 mm x 60 mm x 2 mm |
| Notched Izod (NII) | ASTM D256 | 23 °C | Bar-63.5 mm x 12.7 mm x 3.2 mm |
| Flammability | UL94 | Vertical Burning | |

Flammability tests were performed on samples at a thickness of 1.5 mm, 1.0 mm, and 0.8 mm in accordance with the Underwriter's Laboratory Bulletin 94 "Tests for Flammability of Plastic Materials, UL 94," 20 mm Vertical Burning Flame Test. For each composition, a set of five test samples was used. In some cases, a second set of five bars was tested to give an indication of the robustness of the rating. In this report the following definitions are used as shown in Table 5. Total flame-out-times for all 5 bars (FOT = t1 + t2) were determined. V-ratings were obtained for every set of five bars.

**Table 5**

| | t₁ and/or t₂ | 5-bar FOT | burning drips |
|---|---|---|---|
| V0 | ≤10 | ≤50 | No |
| V1 | ≤30 | ≤250 | No |
| V2 | ≤30 | ≤250 | Yes |
| N.R. (no rating) | >30 | >250 | |

### Examples 1-7

Table 6 shows the compositions and properties for Examples 1-7. Table 6 shows that the Example 4-7 compositions containing the polycarbonate having a pendant ester group (e.g., PC-4, PC-5, and PC-6) feature a balance between mechanical and optical properties and UL-94 flame test ratings at thicknesses of 1.5 mm, 1.0 mm, and 0.8 mm. Comparative Example 1 shows a combination of a linear homopolycarbonate (e.g., PC-1) and a branched polycarbonate (e.g., PC-3) results in good impact (>700 J/m²) and Vicat softening temperature (>142°C), but the UL94 flame test rating at a thickness of 1.0 mm is insufficient using sulfonate salt flame retardant (i.e., Rimar salt). Comparative Example 2 shows that a combination of linear homopolycarbonates of differing molecular weights with anti-drip agent (i.e., TSAN) improves the flame test rating at a 1.0 mm thickness, but results in a loss of transparency (compare Comparative Example 2 with Comparative Example 1). Comparative Example 3 shows that the addition of a combination of branched polycarbonates (e.g., PC-3 and PC-7) to a composition including a combination of linear homopolycarbonates of differing molecular weights in the absence of an anti-drip agent resulted in improved transparency and flame testing rating of V0 at a thickness of 1.0 mm, however, the impact resistance was adversely affected.

Examples 4-7 show that the combination of a branched polycarbonate (e.g., PC-3), a linear homopolycarbonate (e.g., PC-1 and/or PC-2), and polycarbonate having a pendant isopropyl ester group (e.g., PC-4, PC-5, or PC-6) provide the desired combination of impact resistance, haze, and flame test rating of V0 at a 1.0 mm thickness. This was true for polycarbonates having different amounts (mol%) of the pendant ester group (e.g., PC-4, PC-5, and PC-6), wherein the amount of ester (mol%) and branching (mol%) are similar or the same, each based on the total composition. Example 6, incorporating a combination of linear homopolycarbonates with differing molecular weights, also provided a V0 flame test rating at a thickness of 0.8 millimeters.

**Table 6**

| | | 1* | 2* | 3* | 4 | 5 | 6 | 7 |
|---|---|---|---|---|---|---|---|---|
| COMPOSITIONS | | | | | | | | |
| Component | Unit | | | | | | | |
| PC-1 | wt% | 33.00 | 74.30 | 5.00 | 39.49 | | 30.00 | 35.99 |
| PC-2 | wt% | | 25.24 | 29.49 | | 39.49 | 35.99 | 30.00 |
| PC-3 | wt% | 66.02 | | 20.00 | 20.00 | 20.00 | 20.00 | 20.00 |
| PC-4 | wt% | | | | 40.00 | | | |
| PC-5 | wt% | | | | | 40.00 | | |
| PC-6 | wt% | | | | | | 13.50 | 13.50 |
| PC-7 | wt% | | | 45.00 | | | | |
| PETS | wt% | 0.35 | 0.34 | 0.27 | 0.27 | 0.27 | 0.27 | 0.27 |
| Siloxane | wt% | 0.35 | | 0.10 | 0.10 | 0.10 | 0.10 | 0.10 |
| AO | wt% | 0.02 | | 0.05 | 0.05 | 0.05 | 0.05 | 0.05 |
| Phosphite | wt% | 0.060 | 0.060 | 0.014 | 0.014 | 0.014 | 0.014 | 0.014 |
| UVA | wt% | 0.120 | | | | | | |
| RIMAR | wt% | 0.08 | 0.06 | 0.08 | 0.08 | 0.08 | 0.08 | 0.08 |
| TSAN | wt% | | 0.50 | | | | | |
| Total | % | 100.00 | 100.00 | 100.00 | 100.00 | 100.00 | 100.00 | 100.00 |
| Mol% ester | mol% | 0.00 | 0.00 | 0.00 | 0.40 | 0.40 | 0.41 | 0.40 |
| Mol% branching | mol% | 0.26 | 0.00 | 1.43 | 0.08 | 0.08 | 0.08 | 0.08 |

| PROPERTIES | | | | | | | | |
|---|---|---|---|---|---|---|---|---|
| MVR | cm³/10 min | 7 | 10 | 8.12 | 8.60 | 6.80 | 6.50 | 6.50 |
| Vicat | °C | 146 | 142 | | | | | |

| | | 1* | 2* | 3* | 4 | 5 | 6 | 7 |
|---|---|---|---|---|---|---|---|---|
| NII | J/m² | 800 | 800 | 83 | 812 | 815 | 841 | |
| %T, 1.0 mm | % | | | | | | | |
| % Haze, 1.0 mm | % | | | < 1 | < 1 | < 1 | < 1 | |
| %T, 2.0 mm | % | > 90 | <85 | | | | | |
| % Haze, 2.0 mm | % | 1 | >10 | <1 | <1 | <1 | <1 | |
| UL94, 1.5 mm | | V0 | V0 | | | | | |
| t1 + t2, 1.5 mm | sec | | | | | | | |
| UL94, 1.0 mm | ----- | V2 | V0 | V0 | V0 | V0 | V0 | V0 |
| t1 + t2, 1.0 mm | sec | | | | 18 | 21 | 16 | 7.7 |
| UL94, 0.8 mm | ----- | | V2 | | V2 | V2 | V0 | |
| t1 + t2, 0.8 mm | sec | | | | 15 | 18 | 26 | |

| | | | | | | | | |
|---|---|---|---|---|---|---|---|---|
| *Comparative Examples | | | | | | | | |

### Examples 8-20

Table 7 shows the compositions and properties for Examples 8-20 containing a combination of linear homopolycarbonate (PC-1, PC-2), a branched polycarbonate (PC-3), and a polycarbonate having a pendant isopropyl ester group (PC-5, PC-8, PC-6, PC-9), wherein the ester content varies from 0.2 to 1.2 mole percent, and branching is held constant at 0.08 mole percent, except for Example 20 in which the branching is 0.40 mole percent. The examples demonstrate that compositions with a range of ester contents exhibit low haze (<1% at 2 millimeters, Examples 8 to 16) and achieve UL94 V0 ratings at 1.0 millimeter (Examples 14-20) and 0.8 millimeter (Example 15-19).

**Table 7**

| | | 8 | 9 | 10 | 11 | 12 | 13 | 14 |
|---|---|---|---|---|---|---|---|---|
| COMPOSITIONS | | | | | | | | |
| Component | Unit | | | | | | | |
| PC-1 | wt% | 25.00 | 35.00 | 40.00 | 15.00 | 30.00 | 37.50 | 5.00 |
| PC-2 | wt% | 34.49 | 34.49 | 34.49 | 34.49 | 34.49 | 34.49 | 34.49 |
| PC-3 | wt% | 20.00 | 20.00 | 20.00 | 20.00 | 20.00 | 20.00 | 20.00 |
| PC-5 | wt% | 20.00 | | | 30.00 | | | 40.00 |
| PC-8 | wt% | | 10.00 | | | 15.00 | | |
| PC-6 | | | | | | | | |
| PC-9 | wt% | | | 5.00 | | | 7.50 | |
| PETS | wt% | 0.27 | 0.27 | 0.27 | 0.27 | 0.27 | 0.27 | 0.27 |
| Siloxane | wt% | 0.10 | 0.10 | 0.10 | 0.10 | 0.10 | 0.10 | 0.10 |
| AO | wt% | 0.05 | 0.05 | 0.05 | 0.05 | 0.05 | 0.05 | 0.05 |
| Phosphite | wt% | 0.014 | 0.014 | 0.014 | 0.014 | 0.014 | 0.014 | 0.014 |
| RIMAR | wt% | 0.08 | 0.08 | 0.08 | 0.08 | 0.08 | 0.08 | 0.08 |
| Total | % | 100.00 | 100.00 | 0.00 | 100.00 | 100.00 | 100.00 | 100.00 |
| Mol% branching | mol% | 0.08 | 0.08 | 0.08 | 0.08 | 0.08 | 0.08 | 0.08 |
| Mol% ester | mol% | 0.20 | 0.20 | 0.20 | 0.30 | 0.30 | 0.30 | 0.40 |

| PROPERTIES | | | | | | | | |
|---|---|---|---|---|---|---|---|---|
| MVR | cm³/10 min | 7.13 | 7.15 | 6.53 | 6.57 | 6.41 | 7.13 | 6.14 |
| %T, 1.0 mm | % | 91.6 | 91.9 | 91.9 | 91.6 | 91.9 | 91.9 | 91.5 |
| % Haze, 1.0 mm | % | 0.4 | 0.36 | 0.4 | 0.4 | 0.41 | 0.45 | 0.4 |
| %T, 2.0 mm | % | 91 | 91.5 | 91.6 | 91 | 91.5 | 91.4 | 90.7 |
| % Haze, 2.0 mm | % | 0.62 | 0.55 | 0.65 | 0.58 | 0.63 | 0.64 | 0.57 |
| UL94, 1.0 mm | ----- | | | | | | | V0 |
| t1 + t2, 1.0 mm | sec | | | | | | | 10 |
| UL94, 0.8 mm | ----- | | | | | | | |
| t1 + t2, 0.8 mm | sec | | | | | | | |

**Table 7 cont.**

| | | 15 | 16 | 17 | 18 | 19 | 20 |
|---|---|---|---|---|---|---|---|
| COMPOSITIONS | | | | | | | |
| Component | Unit | | | | | | |
| PC-1 | wt% | 34.49 | 34.49 | 34.49 | 34.49 | 34.49 | 35.99 |
| PC-2 | wt% | 25.00 | 35.00 | 5.00 | 25.00 | 15.00 | 30.00 |
| PC-3 | wt% | 20.00 | 20.00 | 20.00 | 20.00 | 20.00 | 20.00 |
| PC-5 | wt% | | | | | | |
| PC-8 | wt% | 20.00 | | 40.00 | | | |
| PC-6 | wt% | | | | | | 13.50 |
| PC-9 | wt% | | 10.00 | | 20.00 | 30.00 | 0.27 |
| PETS | wt% | 0.27 | 0.27 | 0.27 | 0.27 | 0.27 | 0.10 |
| Siloxane | wt% | 0.10 | 0.10 | 0.10 | 0.10 | 0.10 | 0.05 |
| AO | wt% | 0.05 | 0.05 | 0.05 | 0.05 | 0.05 | 0.01 |
| Phosphite | wt% | 0.01 | 0.01 | 0.01 | 0.01 | 0.01 | 0.08 |
| RIMAR | wt% | 0.08 | 0.08 | 0.08 | 0.08 | 0.08 | |
| Total | % | 100.00 | 100.00 | 100.00 | 100.00 | 100.00 | 100.00 |
| Mol% branching | mol% | 0.08 | 0.08 | 0.08 | 0.08 | 0.08 | 0.40 |
| Mol% ester | mol% | 0.40 | 0.40 | 0.80 | 0.80 | 1.20 | 0.08 |

| PROPERTIES | | | | | | | |
|---|---|---|---|---|---|---|---|
| MVR | cm³/10 min | 7.7 | 8.3 | 8.4 | 6.2 | 5.2 | 6.5 |
| %T, 1.0 mm | % | 91.8 | 91.9 | | | | |
| % Haze, 1.0 mm | % | 0.48 | 0.43 | | | | |
| %T, 2.0 mm | % | 91.5 | 91.5 | | | | |
| % Haze, 2.0 mm | % | 0.56 | 0.6 | | | | |
| UL94, 1.0 mm | ----- | V0 | V0 | V0 | V0 | V0 | V0 |
| t1 + t2, 1.0 mm | sec | 8.1 | 8.6 | 8.3 | 9.6 | 14.1 | 7.7 |
| UL94, 0.8 mm | ----- | V0 | V0 | V0 | V0 | V0 | |
| t1 + t2, 0.8 mm | sec | 8.5 | 10.4 | 9.5 | 8.6 | 9.2 | |

### Examples 21-26

Examples 21-26 in Table 8 are compositions containing a combination of linear homopolycarbonate (PC-1 and PC-2), a branched polycarbonate (PC-3), and a polycarbonate having a pendant ethyl ester group (PC-11, PC-12, PC-13), wherein the ester content varies from 0.2 to 1.2 mole percent, and branching is held constant at 0.08 mole percent. The examples demonstrated that compositions with a range of ethyl ester contents achieve UL94 V0 ratings at 1.0 millimeter.

**Table 8**

| | | 21 | 22 | 23 | 24 | 25 | 26 |
|---|---|---|---|---|---|---|---|
| COMPOSITIONS | | | | | | | |
| Component | Unit | | | | | | |
| PC-1 | wt% | 34.40 | 34.40 | 34.49 | 34.40 | 34.49 | 34.49 |
| PC-2 | wt% | 40.09 | 37.59 | 39.00 | 35.09 | 5.00 | 15.00 |
| PC-3 | wt% | 20.00 | 20.00 | 20.00 | 20.00 | 20.00 | 20.00 |
| PC-11 | wt% | 5.00 | 7.50 | | 10.00 | | 30.00 |
| PC-12 | wt% | | | | | 40.00 | |
| PC-13 | wt% | | | 6.00 | | | |
| PETS | wt% | 0.27 | 0.27 | 0.27 | 0.27 | 0.27 | 0.27 |
| Siloxane | wt% | 0.10 | 0.10 | 0.10 | 0.10 | 0.10 | 0.10 |
| AO | wt% | 0.05 | 0.05 | 0.05 | 0.05 | 0.05 | 0.05 |
| Phosphite | wt% | 0.01 | 0.01 | 0.01 | 0.01 | 0.01 | 0.01 |
| RIMAR | wt% | 0.08 | 0.08 | 0.08 | 0.08 | 0.08 | 0.08 |
| Total | % | 100.00 | 100.00 | 100.00 | 100.00 | 100.00 | 100.00 |
| Mol% ester | mol% | 0.2 | 0.3 | 0.3 | 0.4 | 0.4 | 1.2 |
| Mol% branching | mol% | 0.08 | 0.08 | 0.08 | 0.08 | 0.08 | 0.08 |

| PROPERTIES | | | | | | | |
|---|---|---|---|---|---|---|---|
| MVR | cm³/10 min | 8.4 | 8.5 | 8.3 | 8.4 | 7.8 | 13.7 |
| UL94, 1.0 mm | ----- | V0 | V0 | V0 | V0 | V0 | V0 |
| t1 + t2, 1.0 mm | sec | 14.7 | 13.6 | 12.8 | 13.6 | 18.4 | 8.6 |

### Examples 27-32

Examples 27-32 in Table 9 are compositions with a relatively high content of branched polycarbonate (30 or 40 weight percent of PC-3) in combination with linear homopolycarbonate (PC-1), and a polycarbonate having a pendant isopropyl ester group (PC-9) or a pendant ethyl ester group (PC-11). The property results demonstrate that all compositions achieved a UL94 V0 rating at 1.0 and 0.8 millimeter.

**Table 9**

| | | 27 | 28 | 29 | 30 | 31 | 32 |
|---|---|---|---|---|---|---|---|
| COMPOSITIONS | | | | | | | |
| Component | Unit | | | | | | |
| PC-1 | wt% | 29.49 | 19.49 | 19.49 | 29.49 | 19.49 | 19.49 |
| PC-3 | wt% | 30 | 30 | 40 | 30 | 30 | 40 |
| PC-9 | wt% | 40 | 50 | 40 | | | |
| PC-11 | wt% | | | | 40 | 50 | 40 |
| PETS | wt% | 0.27 | 0.27 | 0.27 | 0.27 | 0.27 | 0.27 |
| Siloxane | wt% | 0.1 | 0.1 | 0.1 | 0.1 | 0.1 | 0.1 |
| AO | wt% | 0.05 | 0.05 | 0.05 | 0.05 | 0.05 | 0.05 |
| Phosphite | wt% | 0.014 | 0.014 | 0.014 | 0.014 | 0.014 | 0.014 |
| RIMAR | wt% | 0.08 | 0.08 | 0.08 | 0.08 | 0.08 | 0.08 |
| Total | % | 100.00 | 100.00 | 100.00 | 100.00 | 100.00 | 100.00 |
| mol% ester | mol% | 1.6 | 2.0 | 1.6 | 1.6 | 2.0 | 2.0 |
| mol% branching | mol% | 0.12 | 0.12 | 0.16 | 0.12 | 0.12 | 0.16 |

| PROPERTIES | | | | | | | |
|---|---|---|---|---|---|---|---|
| UL94, 1.0 mm | ----- | V0 | V0 | V0 | V0 | V0 | V0 |
| t1 + t2, 1.0 mm | sec | 10.3 | 11.8 | 11.5 | 10.7 | 10.1 | 9.7 |
| UL94, 0.8 mm | ----- | V0 | V0 | V0 | V0 | V0 | V0 |
| t1 + t2, 0.8 mm | sec | 11.5 | 16.1 | 17.5 | 8.2 | 10.3 | 10.5 |

### Prophetic Examples A-F

Examples A-F in Table 10 are prophetic examples further illustrating compositions according to the invention. They include a combination of homopolycarbonates of different molecular weights (PC-1, PC-2), a branched polycarbonate (PC-3), and a polycarbonate with pendant isopropyl ester groups at either 3 mole percent (PC-6) or 5 mole percent (PC-10). The ester content varies from 0.2 to 0.4 mole percent, and the branching is constant at 0.08 mole percent.

**Table 10**

| | | A | B | C | D | E | F |
|---|---|---|---|---|---|---|---|
| COMPOSITIONS | | | | | | | |
| Component | Unit | | | | | | |
| PC-1 | wt% | 38.59 | 41.00 | 35.09 | 39.00 | 31.59 | 37.00 |
| PC-2 | wt% | 34.40 | 34.49 | 34.40 | 34.49 | 34.40 | 34.49 |
| PC-3 | wt% | 20.00 | 20.00 | 20.00 | 20.00 | 20.00 | 20.00 |
| PC-6 | wt% | 6.50 | | 10.00 | | 13.50 | |
| PC-10 | wt% | | 4.00 | | 6.00 | | 8.00 |
| PETS | wt% | 0.27 | 0.27 | 0.27 | 0.27 | 0.27 | 0.27 |
| Siloxane | wt% | 0.10 | 0.10 | 0.10 | 0.10 | 0.10 | 0.10 |
| AO | wt% | 0.05 | 0.05 | 0.05 | 0.05 | 0.05 | 0.05 |
| Phosphite | wt% | 0.014 | 0.014 | 0.014 | 0.014 | 0.014 | 0.014 |
| RIMAR | wt% | 0.08 | 0.08 | 0.08 | 0.08 | 0.08 | 0.08 |
| Total | % | 100.00 | 100.00 | 100.00 | 100.00 | 100.00 | 100.00 |
| Mol% ester | mol% | 0.2 | 0.2 | 0.3 | 0.3 | 0.4 | 0.4 |
| Mol% branching | mol% | 0.08 | 0.08 | 0.08 | 0.08 | 0.08 | 0.08 |

The compositions, methods, and articles may alternatively comprise, consist of, or consist essentially of, any appropriate materials, steps, or components herein disclosed. The compositions, methods, and articles may additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups may be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that may each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A flame retardant composition comprising
a polycarbonate;
a branched polycarbonate comprising bisphenol carbonate units, 0.01 to 1.0 mol% of a repeating unit derived from a monomer having a pendant ester group, or a combination thereof, and repeating units derived from a branching agent based on the total moles of the composition;
a linear polycarbonate comprising bisphenol carbonate units and 0.01 to 1.0 mol% of a repeating unit derived from a monomer having a pendant ester group based on the total moles of the composition;
a flame retardant comprising an alkyl sulfonate, an aromatic sulfonate, an aromatic sulfone sulfonate, an aromatic organophosphorus compound, or a combination thereof, and optionally a cyclic siloxane;
optionally, an additive composition; and
optionally a filler.

2. The flame retardant composition of Claim 1 wherein a molded sample of the flame retardant composition has
a notched Izod impact of greater than 500 Joules per meter squared at 23 °C at a 3.2 millimeter thickness according to ASTM D256;
a haze of less than 4% at 2 millimeter thickness, a haze of less than 2% at 1 millimeter thickness, or a combination thereof, each according to ASTM D1003;
a UL-94 flame test rating of V0 at a thickness of 1.0 millimeter, a UL-94 flame test rating of V0 at a thickness of 0.8 millimeter, or a combination thereof;
or a combination thereof.

3. The flame retardant composition of any one of the preceding claims wherein the branched polycarbonate comprises
bisphenol carbonate units and repeating units derived from a branching agent wherein the branching agent is present in an amount effective to provide 0.01 to less than 1.43 mol% branching,
bisphenol carbonate units, a repeating unit derived from a monomer having a pendant ester group, and repeating units derived from a branching agent wherein the branching agent is present in an amount effective to provide 0.01-4 mol% branching,
or a combination thereof.

4. The flame retardant composition of any one of the preceding claims comprising
20-80 wt% of the polycarbonate;
10-30 wt% of the branched polycarbonate;
5-50 wt% of the linear polycarbonate comprising repeating units derived from a bisphenol and a monomer having a pendant ester group;
0.01-0.5 wt% of the flame retardant comprising an alkyl sulfonate, an aromatic sulfonate, an aromatic sulfone sulfonate, or a combination thereof, and optionally a cyclic siloxane;
each based on the total weight of the flame retardant composition which totals 100%.

5. The flame retardant composition of any one of the preceding claims, wherein the monomer having the ester pendant group has the structure 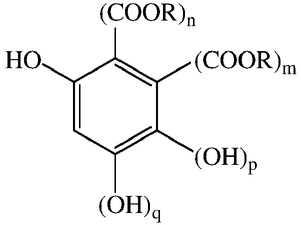 wherein R is C₂-C₁₅ alkyl; each of m, n, p, and q are 0 or 1; m + n = 1; and p + q = 1.

6. The flame retardant composition of any one of the preceding claims, wherein the monomer having the ester pendant group is a branched ester, preferably an isopropyl ester.

7. The flame retardant composition of any one of the preceding claims, wherein the polycarbonate comprises
a homopolycarbonate,
a high heat copolycarbonate derived from a high heat bisphenol monomer and optionally a low heat bisphenol A monomer, wherein the high heat bisphenol monomer is a monomer where the corresponding homopolycarbonate of the monomer has a glass transition temperature of 155 °C or higher as determined per ASTM D3418 with a 20 °C per minute heating rate,
a poly(carbonate-siloxane), or
a combination thereof.

8. The flame retardant composition of any one of the preceding claims wherein the high heat bisphenol monomer is N-phenyl phenolphthalein bisphenol, 1,1-bis(4-hydroxyphenyl)-3,3,5-trimethyl-cyclohexane, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, preferably wherein the high heat bisphenol monomer is N-phenyl phenolphthalein bisphenol, 1,1-bis(4-hydroxyphenyl)-3,3,5-trimethyl-cyclohexane, or a combination thereof.

9. The flame retardant composition of any one of the preceding claims wherein the polycarbonate comprises
a first polycarbonate siloxane) having a siloxane content of 10-30 wt%, based on the total weight of the first poly(carbonate siloxane),
a second polycarbonate siloxane) having a siloxane content of greater than 30-70 wt%, based on the total weight of the second poly(carbonate siloxane), or
a combination thereof.

10. The flame retardant composition of any one of the preceding claims wherein the polycarbonate comprises
a bisphenol A homopolycarbonate having a weight average molecular weight of 18,000-25,000 grams per mole;
a bisphenol A homopolycarbonate having a weight average molecular weight of 27,000-35,000 grams per mole;
or a combination thereof,
each as measured by gel permeation chromatography, using a crosslinked styrene-divinylbenzene column and calibrated to bisphenol A homopolycarbonate standards.

11. The flame retardant composition of any one of the preceding claims wherein the branching agent comprises trimellitic acid, trimellitic anhydride, trimellitic trichloride, tris-p-hydroxyphenylethane, isatin-bis-phenol, tris-phenol (1,3,5-tris((p-hydroxyphenyl)isopropyl)benzene), tris-phenol (4(4(1,1-bis(p-hydroxyphenyl)-ethyl) alpha, alpha-dimethyl benzyl)phenol), 4-chloroformyl phthalic anhydride, trimesic acid, benzophenone tetracarboxylic acid, or a combination thereof.

12. The flame retardant composition of any one of the preceding claims wherein the branched polycarbonate has an endcap derived from a phenol, an alkyl-substituted phenol, an ester-substituted phenol, a cyano-substituted phenol, a halogen substituted phenol, or a combination thereof.

13. An article comprising the polycarbonate composition of any one of the preceding claims, preferably wherein the article is a housing for monitors, a housing for a handheld electronic device, preferably a housing for a cell phone or a personal health care device, a housing for a consumer electronic device, preferably a battery housing, a covers, or a display panel, a housing for an electrical component, preferably an electric vehicle charger, a smart meter cover, a smart meter box, or a lighting component; an electrical connector; a component of a lighting fixture; an ornament; a home appliance; a roof; a greenhouse enclosure, a sun room enclosure, and a swimming pool enclosure.

14. A method for forming the article according to claim 13, comprising molding, casting, or extruding the composition to provide the article.

15. The method of claim 14 comprising molding the article comprising:
heating at a maximum molding temperature of 285 °C at a residence time of less than 10 minutes;
heating at a maximum molding temperature of 295 °C at a residence time of less than 10 minutes; and
heating at a maximum molding temperature of 305 °C at a residence time of less than 10 minutes.

## Patentansprüche

1. Flammhemmende Zusammensetzung, umfassend
ein Polycarbonat;
ein verzweigtes Polycarbonat, umfassend Bisphenolcarbonat-Einheiten, 0,01 bis 1,0 Mol-% einer sich wiederholenden Einheit, die von einem Monomer, das eine seitenständige Estergruppe aufweist, abgeleitet ist, oder eine Kombination davon, und sich wiederholende Einheiten, die von einem Verzweigungsmittel abgeleitet sind, bezogen auf die Gesamtmolzahl der Zusammensetzung;
ein lineares Polycarbonat, umfassend Bisphenolcarbonat-Einheiten und 0,01 bis 1,0 Mol-% einer sich wiederholenden Einheit, die von einem Monomer, das eine seitenständige Estergruppe aufweist, abgeleitet ist, bezogen auf die Gesamtmolzahl der Zusammensetzung;
ein Flammschutzmittel, umfassend ein Alkylsulfonat, ein aromatisches Sulfonat, ein aromatisches Sulfonsulfonat, eine aromatische Organophosphorverbindung, oder eine Kombination davon, und optional ein cyclisches Siloxan;
optional eine Additivzusammensetzung; und
optional einen Füllstoff.

2. Flammhemmende Zusammensetzung nach Anspruch 1, wobei eine geformte Probe der flammhemmenden Zusammensetzung
eine Kerbschlagzähigkeit nach Izod von mehr als 500 Joule pro Quadratmeter bei 23 °C bei einer Dicke von 3,2 Millimetern gemäß ASTM D256;
eine Trübung von weniger als 4 % bei einer Dicke von 2 Millimetern, eine Trübung von weniger als 2 % bei einer Dicke von 1 Millimeter, oder eine Kombination davon, jeweils gemäß ASTM D1003;
eine UL-94-Flammprüfungseinstufung von V0 bei einer Dicke von 1,0 Millimeter, eine UL-94-Flammprüfungseinstufung von V0 bei einer Dicke von 0,8 Millimeter, oder eine Kombination davon;
oder eine Kombination davon aufweist.

3. Flammhemmende Zusammensetzung nach einem der vorhergehenden Ansprüche, wobei das verzweigte Polycarbonat
Bisphenolcarbonat-Einheiten und sich wiederholende Einheiten, die von einem Verzweigungsmittel abgeleitet sind, wobei das Verzweigungsmittel in einer Menge vorhanden ist, die effektiv ist, um eine Verzweigung von 0,01 bis weniger als 1,43 Mol-% bereitzustellen,
Bisphenolcarbonat-Einheiten, eine sich wiederholende Einheit, die von einem Monomer, das eine seitenständige Estergruppe aufweist, abgeleitet ist, und sich wiederholende Einheiten, die von einem Verzweigungsmittel abgeleitet sind, wobei das Verzweigungsmittel in einer Menge vorhanden ist, die effektiv ist, um eine Verzweigung von 0,01 bis 4 Mol-% bereitzustellen,
oder eine Kombination davon umfasst.

4. Flammhemmende Zusammensetzung nach einem der vorangehenden Ansprüche, umfassend
20-80 Gew.-% des Polycarbonats;
10-30 Gew.-% des verzweigten Polycarbonats;
5-50 Gew.-% des linearen Polycarbonats, umfassend sich wiederholende Einheiten, die von einem Bisphenol und einem Monomer, das eine seitenständige Estergruppe aufweist, abgeleitet sind;
0,01-0,5 Gew.-% des Flammschutzmittels, umfassend ein Alkylsulfonat, ein aromatisches Sulfonat, ein aromatisches Sulfonsulfonat, oder eine Kombination davon, und optional ein cyclisches Siloxan;
wobei jedes bezogen ist auf das Gesamtgewicht der flammhemmenden Zusammensetzung, wobei das Gesamte 100 % beträgt.

5. Flammhemmende Zusammensetzung nach einem der vorhergehenden Ansprüche, wobei das Monomer, das die seitenständige Estergruppe aufweist, die Struktur 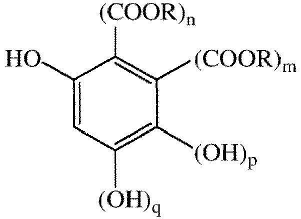 aufweist,
wobei R C₂ -C₁₅ Alkyl ist; m, n, p und q jeweils 0 oder 1 sind; m + n = 1; und p + q = 1.

6. Flammhemmende Zusammensetzung nach einem der vorhergehenden Ansprüche, wobei das Monomer, das eine seitenständige Estergruppe aufweist, ein verzweigter Ester, bevorzugt ein Isopropylester, ist.

7. Flammhemmende Zusammensetzung nach einem der vorhergehenden Ansprüche, wobei das Polycarbonat
ein Homopolycarbonat,
ein hoch-erhitzbares Copolycarbonat, das aus einem hoch-erhitzbaren Bisphenol-Monomer und optional einem niedrig-erhitzbaren Bisphenol-A-Monomer abgeleitet ist, wobei das hoch-erhitzbare Bisphenol-Monomer ein Monomer ist, bei dem das entsprechende Homopolycarbonat des Monomers eine Glasübergangstemperatur von 155 °C oder höher aufweist, bestimmt nach ASTM D3418 mit einer Erhitzungsrate von 20 °C pro Minute,
ein Poly(carbonat-siloxan), oder
eine Kombination davon umfasst.

8. Flammhemmende Zusammensetzung nach einem der vorhergehenden Ansprüche, wobei das hoch-erhitzbare Bisphenol-Monomer N-Phenylphenolphthalein-Bisphenol, 1,1-Bis(4-hydroxyphenyl)-3,3,5-trimethyl-cyclohexan, 4,4'-(1-Phenylethyliden)-bisphenol, 4,4'-(3,3-Dimethyl-2,2-dihydro-1H-inden-1,1-diyl)-diphenol, 1,1 -Bis(4-hydroxyphenyl)cyclododecan, 3,8-Dihydroxy-5a,10b-diphenyl-coumarano-2',3',2,3-coumaran, oder eine Kombination davon ist, wobei das hoch-erhitzbare Bisphenol-Monomer bevorzugt N-Phenylphenolphthalein-Bisphenol, 1,1-Bis(4-hydroxyphenyl)-3,3,5-trimethyl-cyclohexan, oder eine Kombination davon ist.

9. Flammhemmende Zusammensetzung nach einem der vorhergehenden Ansprüche, wobei das Polycarbonat
ein erstes Poly(carbonatsiloxan), das einen Siloxangehalt von 10-30 Gew.-% aufweist, bezogen auf das Gesamtgewicht des ersten Poly(carbonatsiloxans),
ein zweites Poly(carbonatsiloxan), das einen Siloxangehalt von mehr als 30-70 Gew.-% aufweist, bezogen auf das Gesamtgewicht des zweiten Poly(carbonatsiloxans), oder
eine Kombination davon umfasst.

10. Flammhemmende Zusammensetzung nach einem der vorhergehenden Ansprüche, wobei das Polycarbonat
ein Bisphenol-A-Homopolycarbonat, das ein gewichtsmittleres Molekulargewicht von 18 000 bis 25 000 Gramm pro Mol aufweist;
ein Bisphenol-A-Homopolycarbonat, das ein gewichtsmittleres Molekulargewicht von 27 000 bis 35 000 Gramm pro Mol aufweist;
oder eine Kombination davon umfasst,
wobei jedes durch Gelpermeationschromatographie gemessen wird unter Verwendung einer vernetzten Styrol-Divinylbenzol-Säule und kalibriert auf Bisphenol-A-Homopolycarbonat-Standards.

11. Flammhemmende Zusammensetzung nach einem der vorhergehenden Ansprüche, wobei das Verzweigungsmittel Trimellitsäure, Trimellitsäureanhydrid, Trimellitsäuretrichlorid, Tris-p-hydroxyphenylethan, Isatin-bis-phenol, Tris-phenol (1,3,5-Tris((p-hydroxyphenyl)isopropyl)benzol), Tris-Phenol (4(4(1,1-Bis(p-hydroxyphenyl)-ethyl)-alpha, alpha-dimethylbenzyl)phenol), 4-Chloroformylphthalsäureanhydrid, Trimesinsäure, Benzophenontetracarbonsäure, oder eine Kombination davon umfasst.

12. Flammhemmende Zusammensetzung nach einem der vorhergehenden Ansprüche, wobei das verzweigte Polycarbonat ein Endstück aufweist, die von einem Phenol, einem alkylsubstituierten Phenol, einem estersubstituierten Phenol, einem cyanosubstituierten Phenol, einem halogensubstituierten Phenol, oder einer Kombination davon abgeleitet ist.

13. Gegenstand, der die Polycarbonatzusammensetzung nach einem der vorhergehenden Ansprüche umfasst, wobei der Gegenstand bevorzugt ein Gehäuse für Monitore, ein Gehäuse für ein tragbares elektronisches Gerät, bevorzugt ein Gehäuse für ein Mobiltelefon oder ein Gerät für die persönliche Gesundheitsfürsorge, ein Gehäuse für ein elektronisches Verbrauchsgerät, bevorzugt ein Batteriegehäuse, eine Abdeckung oder eine Anzeigetafel, ein Gehäuse für ein elektrisches Bauteil, bevorzugt ein Ladegerät für ein elektrisches Fahrzeug, eine Abdeckung für einen intelligenten Zähler, ein Gehäuse für einen intelligenten Zähler oder ein Beleuchtungsbauteil; ein elektrischer Verbinder; eine Komponente einer Beleuchtungseinrichtung; ein Ornament; ein Haushaltsgerät; ein Dach; eine Gewächshauseinfassung, eine Sonnenraumeinfassung und eine Schwimmbadeinfassung ist.

14. Verfahren zur Bildung des Gegenstands gemäß Anspruch 13, umfassend Formen, Gießen, oder Extrudieren der Zusammensetzung, um den Gegenstand bereitzustellen.

15. Verfahren nach Anspruch 14, das das Formen des Gegenstands umfasst, umfassend:
Erwärmen auf eine maximale Formtemperatur von 285 °C bei einer Verweilzeit von weniger als 10 Minuten;
Erwärmen auf eine maximale Formtemperatur von 295 °C bei einer Verweilzeit von weniger als 10 Minuten; und
Erwärmen auf eine maximale Formtemperatur von 305 °C bei einer Verweilzeit von weniger als 10 Minuten.

## Revendications

1. Composition ignifugeante comprenant
un polycarbonate ;
un polycarbonate ramifié comprenant des motifs carbonate de bisphénol, 0,01 à 1,0 % en moles d'un motif répétitif dérivé d'un monomère ayant un groupe ester pendant, ou une de leurs combinaisons, et des motifs répétitifs dérivés d'un agent de ramification, sur la base des moles totales de la composition ;
un polycarbonate linéaire comprenant des motifs carbonate de bisphénol et 0,01 à 1,0 % en moles d'un motif répétitif dérivé d'un monomère ayant un groupe ester pendant, sur la base des moles totales de la composition ;
un ignifugeant comprenant un alkylsulfonate, un sulfonate aromatique, un sulfonesulfonate aromatique, un composé organique du phosphore aromatique, ou une de leurs combinaisons, et éventuellement un siloxane cyclique ;
éventuellement une composition d'additifs ; et
éventuellement une charge.

2. Composition ignifugeante selon la revendication 1, dans laquelle un échantillon moulé de la composition ignifugeante a
une résistance au choc Izod supérieure à 500 Joules par mètre carré à 23 °C pour une épaisseur de 3,2 millimètres conformément à la norme ASTM D256 ;
un voile inférieur à 4 % pour une épaisseur de 2 millimètres, un voile inférieur à 2 % pour une épaisseur de 1 millimètre, ou une de leurs combinaisons, dans chaque cas conformément à la norme ASTM D1003 ;
une classification de flamme UL-94 de V0 pour une épaisseur de 1,0 millimètre, une classification de flamme UL-94 de V0 pour une épaisseur de 0,8 millimètre, ou une de leurs combinaisons ;
ou une de leurs combinaisons.

3. Composition ignifugeante selon l'une quelconque des revendications précédentes, dans laquelle le polycarbonate ramifié comprend
des motifs carbonate de bisphénol et des motifs répétitifs dérivés d'un agent de ramification, lequel agent de ramification est présent en une quantité efficace pour fournir 0,01 à moins de 1,43 % en moles de ramification,
des motifs carbonate de bisphénol, un motif répétitif dérivé d'un monomère ayant un groupe ester pendant, et des motifs répétitifs dérivés d'un agent de ramification, lequel agent de ramification est présent en une quantité efficace pour fournir 0,01 à 4 % en moles de ramification,
ou une de leurs combinaisons.

4. Composition ignifugeante selon l'une quelconque des revendications précédentes, comprenant
20 à 80 % en poids du polycarbonate ;
10 à 30 % en poids du polycarbonate ramifié ;
5 à 50 % en poids du polycarbonate linéaire comprenant des motifs répétitifs dérivés d'un bisphénol et un monomère ayant un groupe ester pendant ;
0,01 à 0,5 % en poids de l'ignifugeant comprenant un alkylsulfonate, un sulfonate aromatique, un sulfone sulfonate aromatique, ou une de leurs combinaisons, et éventuellement un siloxane cyclique ;
dans chaque cas sur la base du poids total de la composition ignifugeante qui est au total de 100 %.

5. Composition ignifugeante selon l'une quelconque des revendications précédentes, dans laquelle le monomère ayant le groupe ester pendant a la structure 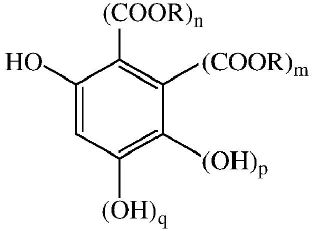 dans laquelle R est un alkyle en C₂ à C₁₅ ; chacun de m, n, p et q vaut 0 ou 1 ; m + n = 1 ; etp + q = 1.

6. Composition ignifugeante selon l'une quelconque des revendications précédentes, dans laquelle le monomère ayant le groupe ester pendant est un ester ramifié, de préférence un ester isopropylique.

7. Composition ignifugeante selon l'une quelconque des revendications précédentes, dans laquelle le polycarbonate comprend
un homopolycarbonate,
un copolycarbonate fortement résistant à la chaleur dérivé d'un monomère de bisphénol fortement résistant à la chaleur et éventuellement d'un monomère de bisphénol A faiblement résistant à la chaleur, parmi lesquels le monomère de bisphénol fortement résistant à la chaleur est un monomère pour lequel l'homopolycarbonate correspondant du monomère a une température de transition vitreuse de 155 °C ou plus telle que déterminée conformément à la norme ASTM D3418 avec une vitesse de montée en température de 20 °C par minute,
un poly(carbonate-siloxane), ou
une de leurs combinaisons.

8. Composition ignifugeante selon l'une quelconque des revendications précédentes, dans laquelle le monomère de bisphénol fortement résistant à la chaleur est N-phénylphénolphtaléine-bisphénol, le 1,1-bis(4-hydroxyphényl)-3,3,5-triméthylcyclohexane, le 4,4'-(1-phényléthylidène)bisphénol, le 4,4'-(3,3-diméthyl-2,2-dihydro-1H-indène-1,1-diyl)diphénol, le 1,1-bis(4-hydroxyphényl)cyclododécane, la 3,8-dihydroxy-5a,10b-diphénylcoumarano-2',3',2,3-coumarane, ou une de leurs combinaisons, de préférence dans laquelle le monomère de bisphénol fortement résistant à la chaleur est N-phénylphénolphtaléine-bisphénol, le 1,1-bis(4-hydroxyphényl)-3,3,5-triméthylcyclohexane, ou une de leurs combinaisons.

9. Composition ignifugeante selon l'une quelconque des revendications précédentes, dans laquelle le polycarbonate comprend
un premier poly(carbonate-siloxane) ayant une teneur en siloxane de 10 à 30 % en poids par rapport au poids total du premier poly(carbonate-siloxane),
un deuxième poly(carbonate-siloxane) ayant une teneur en siloxane supérieure à 30-70 % en poids par rapport au poids total du premier poly(carbonate-siloxane), ou
une de leurs combinaisons.

10. Composition ignifugeante selon l'une quelconque des revendications précédentes, dans laquelle le polycarbonate comprend
un homopolycarbonate de bisphénol A ayant une masse moléculaire moyenne en masse de 18 000 à 25 000 grammes par mole ;
un homopolycarbonate de bisphénol A ayant une masse moléculaire moyenne en masse de 27 000 à 35 000 grammes par mole ;
ou une de leurs combinaisons,
dans chaque cas comme mesuré par chromatographie de perméation sur gel , utilisant une colonne de styrène-divinylbenzène réticulé, étalonnée aux normes d'homopolycarbonate de bisphénol A.

11. Composition ignifugeante selon l'une quelconque des revendications précédentes, dans laquelle l'agent de ramification comprend l'acide trimellitique, l'anhydride trimellitique, le trichlorure trimellitique, le tris-p-hydroxyphényléthane, l'isatine-bisphénol, le trisphénol-(1,3,5-tris((p-hydroxyphényl)isopropyl)benzène), le trisphénol-(4-(4-(1,1-bis(p-hydroxyphényl)éthyle)alpha,alpha-diméthylbenzyl)phénol), l'anhydride 4-chloroformylphtalique, l'acide trimésique, l'acide benzophénonetétracarboxylique, ou une de leurs combinaisons.

12. Composition ignifugeante selon l'une quelconque des revendications précédentes, dans laquelle le polycarbonate ramifié a une coiffe en bout dérivé d'un phénol, d'un phénol à substitution alkyle, d'un phénol à substitution ester, d'un phénol à substitution cyano, d'un phénol à substitution halogène , ou d'une de leurs combinaisons.

13. Article comprenant la composition de polycarbonate de l'une quelconque des revendications précédentes, de préférence lequel article est un boîtier pour moniteurs, un boîtier pour dispositifs électroniques portatifs, de préférence un boîtier pour un téléphone portable ou un dispositif personnel de soin de santé, un boîtier pour un dispositif électronique de consommation, de préférence un boîtier de batterie, un couvercle, ou un panneau d'affichage, un boîtier pour un composant électrique, de préférence un chargeur de véhicule électrique, un couvercle de compteur intelligent, un boîtier de compteur intelligent, ou un composant d'éclairage ; un connecteur électrique ; un composant pour un dispositif d'éclairage ; un ornement ; un appareil ménager ; un toit ; une enceinte de serre, une enceinte de solarium, et un abri de piscine.

14. Méthode pour former l'article de la revendication 13, comprenant le moulage, la coulée, ou l'extrusion de la composition pour former l'article.

15. Méthode selon la revendication 14, comprenant le moulage de l'article, comprenant :
le chauffage à une température de moulage maximale de 285 °C pendant un temps de rétention inférieur à 10 minutes ;
le chauffage à une température de moulage maximale de 295 °C pendant un temps de rétention inférieur à 10 minutes ; et
le chauffage à une température de moulage maximale de 305 °C pendant un temps de rétention inférieur à 10 minutes.
